# EUROPÄISCHE PATENTANMELDUNG

(11) **EP 4 603 737 A1**
(43) Veröffentlichungstag der Anmeldung: **20.08.2025**
(21) Anmeldenummer: 25157674.0
(22) Anmeldetag: 13.02.2025
(51) Int. Cl.: F16L 37/12

(54) **LEITUNGSVERBINDUNG FÜR EINEN KÄLTEKREIS EINES KLIMAGERÄTES, VERFAHREN ZUM HERSTELLEN EINER LEITUNGSVERBINDUNG UND KLIMAGERÄT**

(30) Priorität: 13.02.2024 DE 102024103976
(71) Anmelder: Vaillant GmbH, 42859 Remscheid NRW (DE)
(72) Erfinder: Brinkbäumer, Thomas, 44629 Herne (DE)
(74) Vertreter: Popp, Carsten

(57) **Zusammenfassung**

Vorgeschlagen wird eine Leitungsverbindung (1) für einen Kältekreis zur Verbindung zweier Endbereiche (5,6) einer Leitung des Kältekreises eines Klimagerätes, wobei der zweite Endbereich (6) mit einem äußeren Verbindungsbereich (4), umfassend mindestens einen O-Ring (2), in den inneren Verbindungsbereich (3) des ersten Endbereichs (5) eingebracht ist und ein Sicherungselement (9) die beiden Endbereiche (5,6) sowohl radial als auch axial umschließt und eine axiale Relativbewegung des ersten Endbereichs (5) zum zweiten Endbereich (6) blockiert, wobei das Sicherungselement (9) dazu eingerichtet ist, entgegen einer elastischen Biegekraft geöffnet zu werden.. Zudem wird ein Verfahren zum Herstellen einer Leitungsverbindung (1) sowie ein Klimagerät vorgeschlagen.

## Beschreibung

Die Erfindung betrifft eine Leitungsverbindung für einen Kältekreis eines Klimagerätes, ein Verfahren zum Herstellen einer Leitungsverbindung und ein Klimagerät.

Zumeist wird in Kältekreisen ein Kältemittel zirkuliert, das in der Regel einen Phasenwechsel zum Wärmetransport durchläuft. Derartige Kältekreise finden unter anderem bei Klimageräten wie Klimaanlagen oder Wärmepumpenanlagen Einsatz. Im Kältekreis können dabei in Abhängigkeit von dem verwendeten Kältemittel erhebliche Druck- und Temperaturschwankungen auftreten. Aus Sicherheitsgründen müssen Leitungsverbindungen eines Kältekreises in vielen Ländern für erhebliche Drücke getestet werden.

Die verwendeten Kältemittel weisen häufig ein erhebliches Klimaschädigungspotential auf, so dass ein Austreten von Kältemittel aus dem Kältekreis, neben einem Ausfall des Klimagerätes, auch weitere nicht unbeachtliche Schäden verursachen kann. Neuere Kältemittel, beispielsweise Methan, weisen zwar ein deutlich geringeres Klimaschädigungspotential auf, jedoch geht von Methan aufgrund der Brennbarkeit bei einem Austreten aus dem Kältekreis eine erhebliche Explosionsgefahr aus.

Zudem gewinnen Wärmepumpen zur Wärmeversorgung von Gebäuden zunehmend an Bedeutung. Diese können einen Außenteil aufweisen, das eine Wärmeaufnahme aus einem Umgebungsmedium (Grundwasser, Boden, Luft) gewährleistet, und einen Innenteil, der die Wärme auf einen Heizkreislauf oder eine Warmwasserbereitstellung übertragen kann. In der Regel sind hierbei Innenteil und Außenteil durch einen Kältekreis verbunden, womit der Kältemittelkreis sowohl innerhalb als auch außerhalb eines Gebäudes angeordnet ist. Für die Installation des Kältekreises kommen Leitungsverbindungen zum Einsatz, die einzelne Leitungsabschnitte miteinander verbinden. Um ein Austreten von Kältemittel zu verhindern, müssen diese Leitungsverbindungen den hohen Druck- und Temperaturschwankungen im Kältemittelkreis standhalten und ein Austreten von Kältemittel wirkungsvoll verhindern.

Hierzu sind verschiedene Leitungsverbindungen bekannt. Eingesetzt werden beispielsweise sogenannte Press-Fittings, die eine innenliegend montierte Rundschnurdichtung umfassen können und formschlüssig verpresst werden. Problematisch kann dabei eine Positionsveränderung der Rundschnurdichtung beim Herstellen der Leitungsverbindung nicht festgestellt werden, welche einer dauerhaften Dichtwirkung entgegenstehen könnte.

In der JP 2011-7221 A wird eine Leitungsverbindung vorgestellt, bei der ein Bereich mit außenliegenden Dichtungen unter Verwendung eines Federringes und eines Positionierungsringes in Verbindung gebracht werden kann. Hierzu sind jedoch mehrere zusätzliche Bauteile notwendig, wobei die herzustellende lösbare Verbindung zudem in bestimmten Regionen für Kältekreise im Innenraum (gesetzlich) nicht zugelassen sein kann. Zudem erscheint fraglich, ob die gezeigte Verbindung den, für die Zulassungsprüfung notwendigen, Prüfdrücken standhalten würde.

Auch die EP 1 479 960 A1 zeigt eine Steckverbindung zwischen einem gewellten Metallschlauch und einem Anschlussstück. Dabei ist in einem Wellental des Schlauches eine außenliegende Ringdichtung angeordnet. Eine Sicherungsklammer kann die Welle und einen an dem Anschlussstück vorgesehenen Verbindungsflansch formschlüssig umgreifen oder in den Verbindungsflansch eingreifen. Auch hier sind eine Vielzahl von Bauteilen notwendig, und die Lösbarkeit kann für Verbindungen im Innenraum nicht zugelassen sein.

Die DE 196 42 338 C1 beschreibt ein Verbindungselement zur Verbindung zweier Schlauch- oder Rohrleitungsenden, bei der Anschlussnippel in die Rohr- oder Schlauchenden eingebracht, ineinandergesteckt und mittels eines hülsenartigen Elements gesichert werden. Diese Verbindung ist aufwendig und für Kältemittelleitungen nicht geeignet.

Die DE 10 2007 053 002 A1 offenbart eine Verbindungsanordnung für den Installationsbereich, insbesondere für den Anschluss von Solarkollektoren mit einem Verbindungselement mit zwei Endabschnitten, die mit Anschlussabschnitten von fluidführenden Sammelrohren verbindbar sind. Auch diese Verbindungsanordnung ist aufwendig und für Kältemittelleitungen nicht geeignet.

Die DE 10 2012 112 563 A1 beschreibt eine konfektionierte Fluidleitung mit einem Leitungsverbindungsteil, bei dem ein Steckerschaft umfassend zwei dichtende O-Ringe in einen Muffenteil einsteckbar ist und mit einem Halteteil auf die Leitungsverbindung aufgebracht werden kann. Auch hier müssen in die zu verbindenden Leitungsenden zunächst Anschlussnippel eingebracht werden. Somit ist die Lösung aufwendig und kann den bei einer Kältemittelleitung auftretenden Drücken nicht standhalten.

Die EP 1 378 701 A1 zeigt eine Schnellverbindung zum Verbinden von zwei Rohrenden, beispielsweise einer Kraftstoffleitung eines Fahrzeuges, bei der an den Rohrenden angeordnete Rastnocken mittels eines elastisch deformierbaren Rings verbunden werden. Diese Lösung ist für Kältemittelleitungen nicht einsetzbar.

Die DE 102 45 477 A1 offenbart eine Vorrichtung zur gasdichten Verbindung von zwei Rohrleitungsabschnitten, insbesondere für den Einsatz in einer Heiz-, Belüftungs- oder Klimaanlage eines Kraftfahrzeugs, die unterschiedlich wechseldruckempfindliche, elastische Elemente umfasst. Diese Verbindung ist aufwendig und zur Verbindung metallischer Leitungen nicht geeignet.

Hiervon ausgehend ist es Aufgabe der Erfindung, eine Leitungsverbindung für einen Kältekreis eines Klimagerätes, ein Verfahren zur Herstellung derselben und ein Klimagerät vorzuschlagen, die die geschilderten Probleme des Standes der Technik zumindest teilweise überwinden. Insbesondere soll eine Leitungsverbindung angegeben werden, die eine ausreichende Standfestigkeit gegenüber den im Kältekreis auftretenden bzw. für ein Zulassungsverfahren nachzuweisenden hohen Drücken aufweist und auf einfache Weise mit wenigen Bauteilen herstellbar ist.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Leitungsverbindung zur Verbindung eines ersten und eines zweiten Endbereichs einer Leitung eines Kältekreises eines Klimagerätes bei. Dabei umfasst der zweite Endbereich einen äußeren Verbindungsbereich mit mindestens einem O-Ring und ist in einen inneren Verbindungsbereich des ersten Endbereichs eingebracht. Ein Sicherungselement umschließt die beiden Endbereiche sowohl radial als auch axial, so dass eine axiale Relativbewegung des ersten Endbereichs zum zweiten Endbereich blockiert wird, wobei das Sicherungselement dazu eingerichtet ist, entgegen einer elastischen Biegekraft geöffnet zu werden.

Klarstellend wird angemerkt, dass die zwei Endbereiche einer Leitung auch als Endbereiche jeweils einer Leitung verstanden werden können, die zu einer (gemeinsamen oder zusammenwirkenden) Leitung (ohne Stoffschluss, insbesondere ohne Hartlotverbindung) miteinander verbunden werden.

Die Leitungsverbindung ist für einen Kältekreis eines Klimagerätes geeignet und erfüllt daher vorgegebene Anforderungen an Dichtheit und Druckbeständigkeit. Dabei liegt bevorzugt eine vorgegebene Standfestigkeit gegenüber einem Vielfachen des späteren Betriebsdruckes vor. Bei der Verwendung von R32 sollte eine Leitungsverbindung einem Druck von zumindest 138 bar (mindestens der dreifache Betriebsdruck von 46 bar) standhalten.

Mittels der Leitungsverbindung kann ein erstes Leitungsende mit einem ersten Endbereich mit einem zweiten Leitungsende mit einem zweiten Endbereich verbunden werden. Dabei bildet der ersten Endbereich einem inneren Verbindungsbereich und der zweite Endbereich einen äußeren Verbindungsbereich aus. Der äußeren Verbindungsbereich ist dazu eingerichtet, in den inneren Verbindungsbereich in axialer Richtung eingebracht bzw. gesteckt zu werden. Innerer und äußerer Verbindungsbereich können dabei insbesondere zylinderförmig bzw. koaxial überlappend ausgebildet sein. Auf einer Außenfläche oder Mantelfläche des äußeren Verbindungsbereichs kann dabei mindestens ein O-Ring vorgesehen sein, der die Leitungsverbindung abdichtet. Hierzu kann die Außenfläche des äußeren Verbindungsbereiches mindestens eine umlaufende Nut aufweisen, um den mindestens einen O-Ring aufzunehmen. Der O-Ring ist insbesondere ein flexibles, separates Bauteil, welches an dem Leitungsende in einer vorbestimmten Position (kraft- und/oder formschlüssig) hinzugefügt ist und ggf. auch durch eine reversible Verformung von dem Leitungsende entfernbar ist.

Erster Endbereich und zweiter Endbereich können die Endbereiche einer bekannten Leitung für einen Kältekreis, beispielsweise bestehend aus einem metallischen Material, beispielsweise Kupfer, Messing, Edelstahl und/ oder Aluminium.

Der erste Endbereich und der zweite Endbereich können jeweils einen Sicherungsbereich ausbilden, der zumindest teilweise radial auskragt. Eine Sicherungselement umschließt die Sicherungsbereiche von innerem Verbindungsbereich und/oder äußerem Verbindungsbereich und blockiert eine axiale Bewegung bzw. ein axiales Entfernen des ersten Endbereiches von dem zweiten Endbereich und damit ein Lösen der Leitungsverbindung.

Der innere Verbindungsbereich kann gegenüber der Leitung mit einem erhöhten Durchmesser ausgebildet sein. Der Bereich, der in dem der Durchmesser sich erhöht, kann eine radiale Kante ausbilden, die einen ersten Sicherungsbereich ausbilden kann bzw. ausbildet. Der äußere Verbindungsbereich kann beispielsweise eine radial umlaufende Wulst aufweisen, die einen Sicherungsbereich ausbilden kann.

Äußerer Verbindungsbereich und innerer Verbindungsbereich können eine axiale Länge aufweisen, die es ermöglicht, den äußeren Verbindungsbereich vollständig im inneren Verbindungsbereich aufzunehmen. Ein als radial umlaufende Wulst ausgebildeter Sicherungsbereich des äußeren Verbindungsbereichs kann formschlüssig in den inneren Verbindungsbereich eingreifen, und insbesondere die Verbindung gegenüber Umgebungseinflüssen, wie beispielsweise Staub, schützen.

Das Sicherungselement umschließt bevorzugt den Sicherungsbereich des ersten Endbereichs und den Sicherungsbereich des zweiten Endbereichs axial und radial. Das axiale Umschließen der Sicherungsbereiche kann bewirken, dass der äußere Verbindungsbereich nicht aus dem inneren Verbindungsbereich austreten kann und blockiert somit eine axiale Relativbewegung von innerem zu äußerem Verbindungsbereich. Der äußere Verbindungsbereich und der innere Verbindungsbereich können hierfür (im Wesentlichen) die gleiche axiale Länge aufweisen.

Gemäß einer Ausgestaltung kann das Sicherungselement den zum Endbereich benachbarten Bereich der Leitung umschließen und so das erste Leitungsende und das zweite Leitungsende fluchtend ausrichten und/oder fixieren. Vorteilhaft können so auf die Leitungsverbindung und insbesondere auf inneren und äußeren Verbindungsbereich wirkende Biegekräfte gemindert und/oder die Standfestigkeit der Leitungsverbindung verbessert werden.

Gemäß einer Ausgestaltung kann das Sicherungselement aus einem flächigen Material bestehen, das eine Länge aufweist, die größer dem axialen Abstand von erstem Sicherungsbereich zum zweiten Sicherungsbereich, so dass ein (weitestgehend) formschlüssiges axiales Umschließen der beiden Sicherungsbereiche durch das Sicherungselement möglich bzw. realisiert / realisierbar ist. Das flächige Material kann derart geformt sein, dass es eine Querschnittsform bildet, die ein radiales Umschließen der Leitungsverbindung ermöglicht. Die Querschnittsform kann kreisrund oder die Form eines n-Eckes aufweisen. Insbesondere kann die Querschnittsform dreieckig oder viereckig ausgebildet sein.

Gemäß einer Ausgestaltung kann das Sicherungselement mindestens eine, insbesondere zwei, Ausnehmung(en) für den gegenüber der Leitung vergrößerten Durchmesser des inneren Verbindungsbereiches aufweisen. Im Einbauzustand entspricht die axiale Länge einer Ausnehmung dem maximalen axialen Abstand zwischen dem ersten Sicherungsbereich des inneren Verbindungsbereiches und des zweiten Sicherungsbereiches des äußeren Verbindungsbereiches. Insofern kann der Verbindungsbereich, begrenzt durch die beiden Sicherungsbereiche, von der mindestens einen Ausnehmung axial umschlossen werden.

Gemäß einer Ausgestaltung kann das Sicherungselement öffenbar sein, wobei im geöffneten Zustand der innere Verbindungsbereich enthaltend den äußeren Verbindungsbereich aufgenommen werden kann. Mit der Schließbewegung kann ein Umschließen der beiden Sicherungsbereiche bewirkt werden. Bei der Ausgestaltung des Sicherungselementes aus einem flächigen Material kann das Öffnen in einem Öffnen der Querschnittsform bestehen, so dass die Leitungsverbindung in das Innere der Querschnittsform verbracht werden kann.

Dabei ist das Sicherungselement dazu eingerichtet, entgegen einer elastischen Biegekraft geöffnet zu werden. Diese Ausführung ist besonders einfach in Herstellung und Anwendung. So kann die elastische Biegekraft ein selbsttätiges Schließen des Sicherungselementes bewirken und ein selbsttätiges und selbstsicherndes Umschließen der beiden Sicherungsbereiche bewirken. Hierzu kann das Sicherungselement aus einem geeigneten Material bestehen, beispielsweise Federstahl. Zudem kann das Sicherungselement einen Federbereich ausbilden, der eine Ausgestaltung hat, die ein Öffnen des Sicherungselementes mittels einer vollständig elastischen Biegung begünstigt.

Gemäß einer Ausgestaltung kann das Sicherungselement aus einem metallischen Material, insbesondere Edelstahl, einem rostfreien Federstahl oder einen Kunststoff bestehen.

Gemäß einer Ausgestaltung kann das Sicherungselement dazu eingerichtet sein, mittels einer Verbindung ausgewählt aus einer Schweißverbindung, einer Clinchverbindung, einer Schraubverbindung, einer Klebverbindung, einer Clipverbindung und/ oder Nietverbindung geschlossen zu werden bzw. geschlossen zu sein. So kann ein versehentliches Öffnen des Sicherungselementes verhindert werden. Die Auswahl einer geeigneten Verbindung kann dabei auch lokale Vorschriften mit einbeziehen, so sind häufig nur Leitungsverbindungen zulässig, die nicht zerstörungsfrei lösbar sind.

Nach einem weiteren Aspekt wird auch ein Klimagerät vorgeschlagen mit mindestens einer hier angegebenen Leitungsverbindung. Bei dem Klimagerät kann es sich insbesondere um eine Klimaanlage oder eine Wärmepumpenanlage handeln. Das Klimagerät kann einen Verflüssiger, eingerichtet zur Abgabe von Wärme, und einen Verdampfer, eingerichtet zur Aufnahme von Wärme umfassen, die mittels des Kältekreises verbunden sind. Der Kältekreis kann zudem einen Kompressor und ein Kompressionsventil umfassen, die jeweils zwischen Verdampfer und Verflüssiger angeordnet sein können und die für die Verflüssigung und Verdampfung des Kältemittels geeignete Drücke einstellen.

Gemäß einer Ausgestaltung kann das Sicherungselement Teil eines Bauteils des Klimageräts sein. Beispielhaft kann das Sicherungselement aus einem Bereich eines Gehäuseteils an einer Position einer Leitungsverbindung hergestellt werden. Hierfür kann das Sicherungselement aus einem flächigen Gehäusematerial bei der Herstellung des Gehäuses ausgebildet werden. Vorteilhaft kann so gleichzeitig die Leitung bzw. die Leitungsverbindung im oder am Gehäuse fixiert, der Montageprozess kann vereinfacht und es kann Material eingespart werden.

Nach einem weiteren Aspekt wird auch ein Verfahren zum Herstellen einer hier vorgeschlagenen Leitungsverbindung vorgeschlagen, umfassend zumindest die folgenden Schritte:
a) vollständiges Einbringen des äußeren Verbindungsbereiches in den inneren Verbindungsbereich,
b) Öffnen des Sicherungselementes und Einbringen des in Schritt a) gebildeten Verbunds aus innerem Verbindungsbereich und äußeren Verbindungsbereich, und
c) Schließen des Sicherungselementes und gleichzeitiges Blockieren einer Relativbewegung des inneren Verbindungsbereichs weg vom äußeren Verbindungsbereich.

Die Schritte a), b), c) und gegebenenfalls d) können dabei einmal in der angegebenen Reihenfolge durchgeführt werden. Das Verfahren ermöglicht eine besonders einfache und schnelle Herstellung einer Leitungsverbindung eines Kältekreises eines Klimageräts.

Gemäß einer Ausgestaltung kann in einem optionalen Schritt d) ein erneutes Öffnen des Sicherungselementes durch eine Verbindung ausgewählt aus Schweißen, Clinchen, Schrauben, Kleben, einer Clipsen und/ oder Nieten verhindert werden.

Die Anforderung einer dauerhaft dichten Verbindung, die nicht hartgelötet ist, kann demnach durch eine O-Ringverbindung mit einem oder zwei O-Ringen erreicht werden, wobei ein Auseinanderdriften/Öffnen der Verbindung durch z.B. eine Bügelklammer verhindert wird, wobei die Bügelklammer durch verschiedene Arten der Fixierung (z.B. Punktschweißen, Clinchen, Schrauben, Nieten etc.) gesichert wird.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die im Zusammenhang mit der Leitungsverbindung erörterten Details, Merkmale und vorteilhaften Ausgestaltungen können entsprechend auch bei dem hier vorgestellten Verfahren und dem Klimagerät auftreten und umgekehrt. Insoweit wird auf die dortigen Ausführungen zur näheren Charakterisierung der Merkmale vollumfänglich Bezug genommen.

Hier werden somit eine Leitungsverbindung für einen Kältekreis eines Klimagerätes, ein Verfahren zur Herstellung einer Leitungsverbindung sowie ein Klimagerät angegeben, welche die mit Bezug auf den Stand der Technik geschilderten Probleme zumindest teilweise lösen. Insbesondere tragen die Leitungsverbindung, das Verfahren sowie das Klimagerät zumindest dazu bei, eine dauerhafte und sichere Leitungsverbindung für einen Kältekreis eines Klimagerätes anzugeben, die besonders einfach aufgebaut und druckstabil ist. Zudem lässt sich das Verfahren zur Herstellung der Leitungsverbindung sehr gut in einen Herstellungsprozess eines Klimageräts integrieren.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig. 1: einen ersten und einen zweiten Endbereich für eine hier vorgeschlagene Leitungsverbindung,
Fig. 2 und 3: Darstellungen einer hier vorgestellten Leitungsverbindung, und
Fig. 3 und 4 Schnittdarstellungen einer hier vorgestellten Leitungsverbindung.

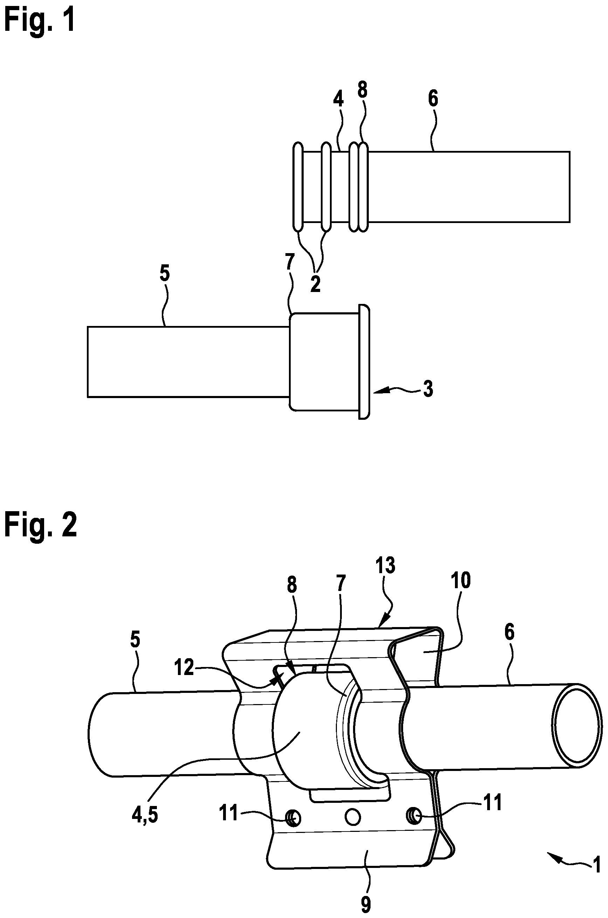

Fig. 1 zeigt beispielhaft und schematisch einen ersten Endbereich 5 mit einem inneren Verbindungsbereich 3 und einen zweiten Endbereich 6 mit einem äußeren Verbindungsbereich 4. Der äußeren Verbindungsbereich 4 weist zwei O-Ringe 2 als Dichtelemente der Leitungsverbindung 1 auf. Der erste Endbereich 5 bzw. der inneren Verbindungsbereich 3 weist einen ersten Sicherungsbereich 7 und der zweite Endbereich 6 bzw. der äußere Verbindungsbereich 4 einen zweiten Sicherungsbereich 8. Der erste bzw. zweite Sicherungsbereich 7,8 wird hier durch eine axial ausgerichtet Angriffsfläche für ein Sicherungselement 9 gebildet.

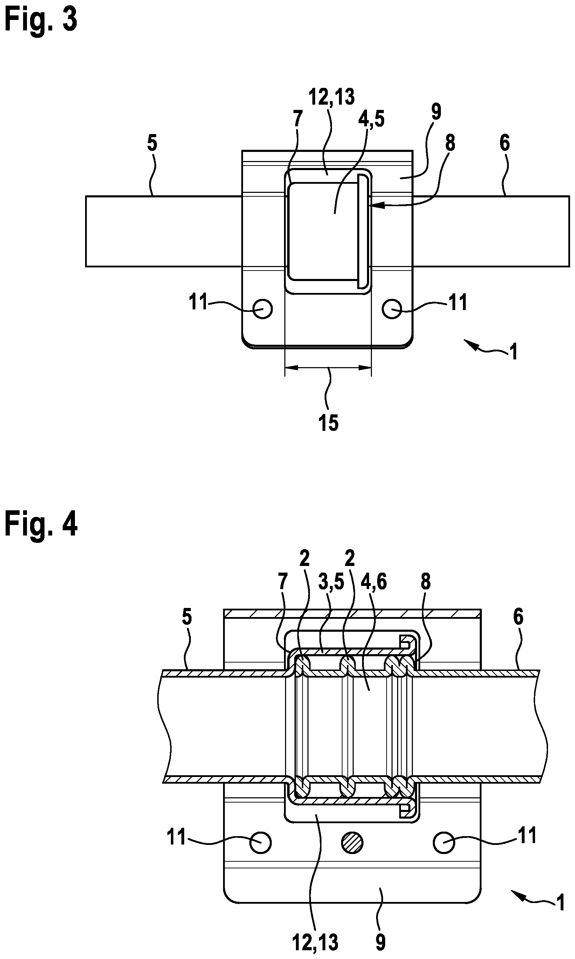

Fig. 2 und Fig. 3 zeigen eine mit dem ersten Endbereich 5 und dem zweiten Endbereich 6 gebildete Leitungsverbindung 1. Hierzu ist der äußere Verbindungsbereich 4 des zweiten Endbereichs 6 in den inneren Verbindungsbereich 3 eingebracht bzw. eingesteckt. Der zweite Sicherungsbereich 8 kann dabei zumindest teilweise in den inneren Verbindungsbereich 3 eingreifen und so beispielsweise zu einen Staubschutz der Verbindung beitragen. Nach dem Einbringen bilden der erste Sicherungsbereich 7 und der zweite Sicherungsbereich 8 einen axial äußeren Abschluss der Verbindung.

Ein Sicherungselement 9 wurde auf den Verbund von erstem Endbereich 5 und zweitem Endbereich 6 aufgebracht, so dass es den Verbund sowohl axial als auch radial umschließt. Das Sicherungselement 9 kann zwei Ausnehmungen 12, 13 aufweisen, die zweiseitig den Verbund von erstem Endbereich 5 und zweitem Endbereich 6 bzw. insbesondere den ersten und zweiten Sicherungsbereich 7,8 umschließen. Die Ausnehmungen 12, 13 können dabei eine axiale Länge 15 aufweisen, die dem (äußeren bzw. maximalen) Abstand von erstem Sicherungsbereich 7 zum zweiten Sicherungsbereich 8 entspricht. Hierbei kann ein zusätzliches Spiel vorgesehen sein, um eine problemlose Montage zu gewährleisten. Das Sicherungselement 9 kann eine Querschnittsform 10 aufweisen, die die Endbereiche 5, 6 radial fixiert und damit eine Biegebelastung der Leitungsverbindung 1 verhindert.

Das Sicherungselement 9 kann zudem Verbindungspunkte 11 aufweisen, mittels derer ein Öffnen des Sicherungselementes 9 verhindert werden kann. Die Verbindungspunkte 11 können beispielsweise mit einem Schweißpunkt oder einem Niet versehen werden, um eine nicht zerstörungsfrei lösbare Leitungsverbindung 1 zu schaffen.

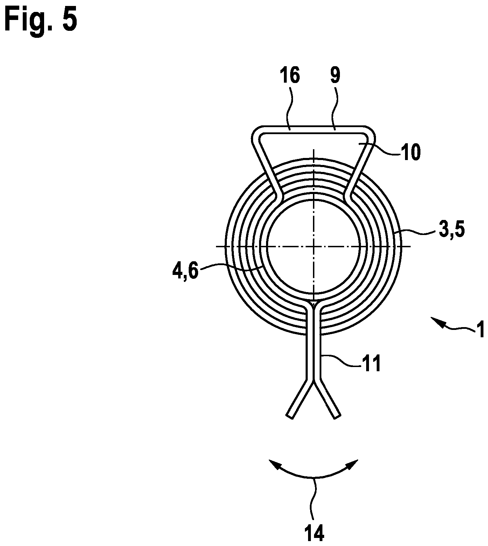

Fig. 4 und Fig. 5 zeigen Schnittdarstellungen einer hier vorgeschlagenen Leitungsverbindung 1. Die Fig. 4 zeigt einen Axialschnitt und die Fig. 5 einen Radialschnitt. In Fig. 4 ist die dichtende Verbindung mittels der O-Ringe 2 des äußeren Verbindungsbereiches 4 im inneren Verbindungsbereich 3 erkennbar. Fig. 5 zeigt die Querschnittsform 10 des Sicherungselementes 9. Bei Öffnen des Sicherungselementes 9 in einer Öffnungsrichtung 14 kann die Öffnungsbewegung durch eine elastische Verformung in einem Federbereich 16 des Sicherungselementes 9 bewirkt werden.

### Bezugszeichenliste

- 1: Leitungsverbindung
- 2: O-Ring
- 3: innerer Verbindungsbereich
- 4: äußerer Verbindungsbereich
- 5: erster Endbereich
- 6: zweiter Endbereich
- 7: erster Sicherungsbereich
- 8: zweiter Sicherungsbereich
- 9: Sicherungselement
- 10: Querschnittsform Sicherungselement
- 11: Verbindungspunkt
- 12: erste Ausnehmung
- 13: zweite Ausnehmung
- 14: Öffnungsrichtung
- 15: axiale Länge Ausnehmung
- 16: Federbereich

## Patentansprüche

1. Leitungsverbindung (1) für einen Kältekreis zur Verbindung zweier Endbereiche (5,6) einer Leitung des Kältekreises eines Klimagerätes, wobei der zweite Endbereich (6) mit einem äußeren Verbindungsbereich (4), umfassend mindestens einen O-Ring (2), in den inneren Verbindungsbereich (3) des ersten Endbereichs (5) einbringbar oder eingebracht ist und ein Sicherungselement (9) die beiden Endbereiche (5,6) sowohl radial als auch axial umschließt oder umschließen kann, so dass eine axiale Relativbewegung des ersten Endbereichs (5) zum zweiten Endbereich (6) blockiert ist, wobei das Sicherungselement (9) dazu eingerichtet ist, entgegen einer elastischen Biegekraft geöffnet zu werden.

2. Leitungsverbindung (1) nach Anspruch 1, wobei der erste Endbereich (5) und der zweite Endbereich (6) einen radial auskragenden Sicherungsbereich (7, 8) aufweisen, und der radial auskragende Sicherungsbereich (7, 8) des ersten Endbereichs (5) und des zweiten Endbereichs (6) von dem Sicherungselement (9) axial umschlossen ist.

3. Leitungsverbindung (1) nach einem der vorangehenden Ansprüche, wobei das Sicherungselement (9) öffenbar ist und die Verbindung zweier Endbereiche (5, 6) aufgenommen werden kann.

4. Leitungsverbindung (1) nach Anspruch 1 oder 3, wobei das Öffnen des Sicherungselements (9) mittels einer Verbindung ausgewählt aus einer Schweißverbindung, einer Clinchverbindung, Schraubverbindung, Klebverbindung, Clipverbindung und/ oder Nietverbindung unterbunden ist.

5. Leitungsverbindung (1) nach einem der vorangehenden Ansprüche, wobei das Sicherungselement (9) aus einem metallischen Werkstoff, Edelstahl, Federstahl und/ oder einem Kunststoff gefertigt ist.

6. Leitungsverbindung (1) nach einem der vorangehenden Ansprüche, wobei erster Endbereich (5) und zweiter Endbereich (6) aus Kupfer, Messing, Edelstahl und/ oder Aluminium bestehen.

7. Verfahren zum Herstellen einer Leitungsverbindung (1) nach einem der vorangehenden Ansprüche, umfassend zumindest die folgenden Schritte:
a) vollständiges Einbringen des äußeren Verbindungsbereiches (4) in den inneren Verbindungsbereich (3),
b) Öffnen des Sicherungselementes (9) und Einbringen des in Schritt a) gebildeten Verbunds aus innerem Verbindungsbereich (3) und äußerem Verbindungsbereich (4), und
c) Schließen des Sicherungselementes (9) und gleichzeitiges Blockieren einer Relativbewegung des inneren Verbindungsbereichs (3) weg vom äußeren Verbindungsbereich (4).

8. Verfahren nach Anspruch 8, wobei in einem optionalen Schritt d) ein erneutes Öffnen des Sicherungselementes (9) durch eine Verbindung hergestellt durch Schweißen, Clinchen, Schrauben, Kleben, einer Clipsen und/ oder Nieten verhindert wird.

9. Klimagerät, umfassend einen Kältekreis mit mindestens einer Leitungsverbindung (1) nach einem der Ansprüche 1 bis 6.

10. Klimagerät nach Anspruch 9, wobei das Sicherungselement (9) Teil eines Bauteils des Klimageräts ist.
